# EUROPEAN PATENT APPLICATION

(11) **EP 1 862 247 A2**
(43) Date of publication of application: **05.12.2007**
(21) Application number: 07108985.8
(22) Date of filing: 25.05.2007
(51) Int. Cl.: B23K 3/06

(54) **Microwave Brazing Using Mim Preforms**

(30) Priority: 31.05.2006 US 421370
(71) Applicant: General Electric Company, Schenectady, NY 12345 (US)
(72) Inventor: BUDINGER, David E., Loveland, OH 45140 (US)
(74) Representative: Illingworth-Law, William Illingworth

(57) **Abstract**

A method of producing a braze preform (32) for microwave brazing includes providing a mixture of a brazing alloy in metallic powder (34) form and a binder (36), and melting the binder (36) and forming the mixture into a preform (32) having a preselected shape. A method of bonding together two metallic components includes: providing a braze preform (32) comprising brazing alloy in metallic powder (34) form contained in a solidified binder (36); placing the preform (32) adjacent to or within a joint defined between the metallic components; heating the preform (32) using microwave energy to a brazing temperature above the melting point of the perform (32), to cause the brazing alloy to melt and flow into the joint; and allowing the brazing alloy to cool to form a bond between the metallic components.

## Description

### BACKGROUND OF THE INVENTION

This invention relates generally to braze joining of metallic components and more particularly to braze alloy preforms.

Metallic components, especially gas turbine engine components, are often bonded to each other through brazing. In brazing, a metallic alloy with a melting point lower than the components being joined is placed between the components. The entire assembly is then heated to a temperature above the melting point of the braze alloy and below the melting point of the components, causing the alloy to flow into the joint. When cooled, the result is a structural joint without detrimental effect on the metallurgical properties of the joined components.

It is known to use microwave heating to locally heat braze alloys while not heating the substrate material of the component parts being joined. Braze joints have been produced using conventional braze alloys. The microwaves establish a magnetic field around the powder particles causing them to heat above their melting point. This molten pool continues to heat and flows into the braze joint or crack by capillary action. The only heating of the substrate is isolated to the area adjacent to the molten pool by thermal conduction. This process allows selective heating of the braze powder without heating the substrate material outside the braze area.

However, in such processes the braze alloy is typically applied in a slurry form which spreads to a enlarged area on the substrate material. This increased contact area allows increased thermal conduction between the heated braze powder and the substrate material. This results into increased heating of the substrate material and hinders the desired selective heating.

Accordingly, there is a need for a method of microwave brazing of components without excessive heating.

### BRIEF SUMMARY OF THE INVENTION

The above-mentioned need is met by the present invention, which according to one aspect provides a method of producing a braze preform for microwave brazing, including: providing a mixture of a brazing alloy in metallic powder form and a binder; and melting the binder and forming the mixture into a preform having a preselected shape.

According to another aspect of the invention, a method of bonding together two metallic components includes: providing a braze preform comprising brazing alloy in metallic powder form contained in a solidified binder; placing the preform adjacent to or within a joint defined between the metallic components; heating the preform using microwave energy to a brazing temperature above the melting point of the preform, to cause the brazing alloy to melt and flow into the joint; and allowing the brazing alloy to cool to form a bond between the metallic components.

### BRIEF DESCRIPTION OF THE DRAWINGS

The invention may be best understood by reference to the following description, provided by way of example only, taken in conjunction with the accompanying drawing figures in which:
Figure 1 is a perspective view of an exemplary turbine nozzle segment;
Figure 2 is a perspective view of a pair of turbine nozzle "singlets" which make up the nozzle segment of Figure 1, prior to a joining operation;
Figure 3 is a perspective view of the nozzle "singlets" of Figure 2 placed side-by side in preparation for a joining operation;
Figure 4 is cross-sectional view of a portion of Figure 3; and
Figure 5 is a schematic view of the nozzle singlets of Figure 2 positioned in a chamber for a microwave brazing process.

### DETAILED DESCRIPTION OF THE INVENTION

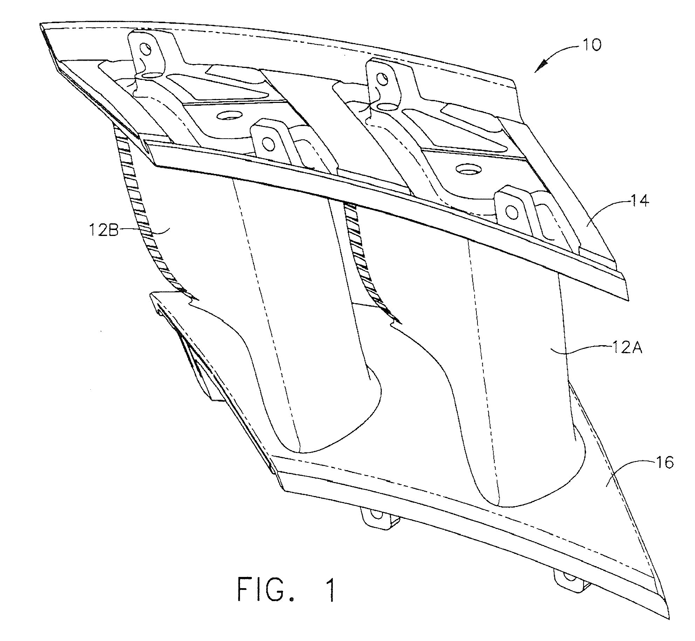

Referring to the drawings wherein identical reference numerals denote the same elements throughout the various views, Figure 1 depicts an exemplary turbine nozzle segment 10 which includes nozzle vanes 12A and 12B disposed between arcuate outer and inner bands 14 and 16. The vanes 12 define airfoils configured so as to direct the combustion gases to a turbine rotor (not shown) located downstream thereof. The outer and inner bands 14 and 16 define the outer and inner radial boundaries, respectively, of the gas flow through a nozzle segment 10. A gas turbine engine will include a plurality of such segments 10 arranged circumferentially in an annular configuration.

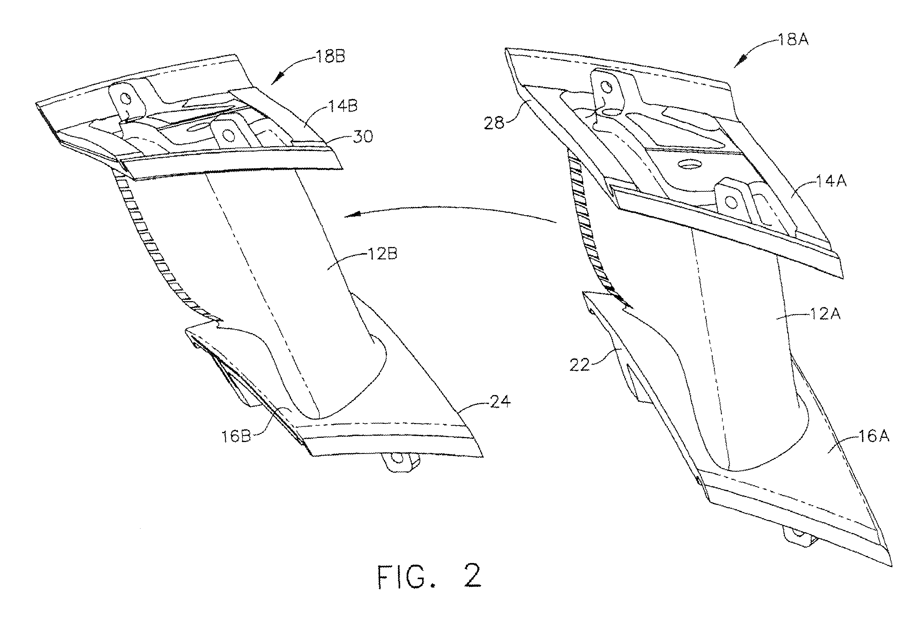

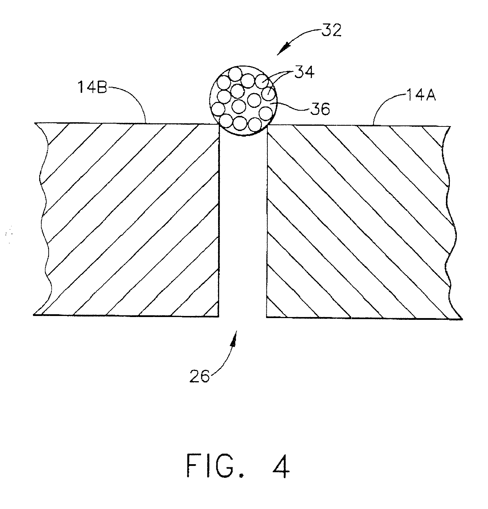

Figure 2 depicts an exemplary pair of turbine nozzle "singlets" 18A and 18B which are assembled together to form the nozzle segment 10. Each of the singlets 18 includes one of the nozzle vanes 12A, 12B disposed between arcuate outer and inner band portions 14A, 14B, and 14C, 14D, respectively. The singlets 18 are typically cast from a metal alloy having enhanced strength at high temperatures, e.g. about 1100° C (2000° F) or greater. Such alloys are often nickel- or cobalt-based and are referred to in the art as "superalloys". The singlets 18A and 18B are bonded together along an inner joint 20 (Figure 4) defined by mating edges 22 and 24 of the inner band portions 16A and 16B, and an outer joint 26 defined by mating edges 28 and 30 of the outer band portions 14A and 14B.

The singlets 18 are often cast with a directionally-solidified (DS) or single-crystal (SC) microstructure which is degraded by liquid-phase bonding techniques such as fusion welding. Therefore, the singlets 18A and 18B are typically joined by brazing. It is noted that the exemplary configuration is only one of many known configurations of braze joints for a turbine nozzle segment, and the nozzle segment 10 itself is only one example of numerous components and assemblies, particularly within a gas turbine engine, which are commonly assembled by brazing. The present invention is applicable to any type of braze joint.

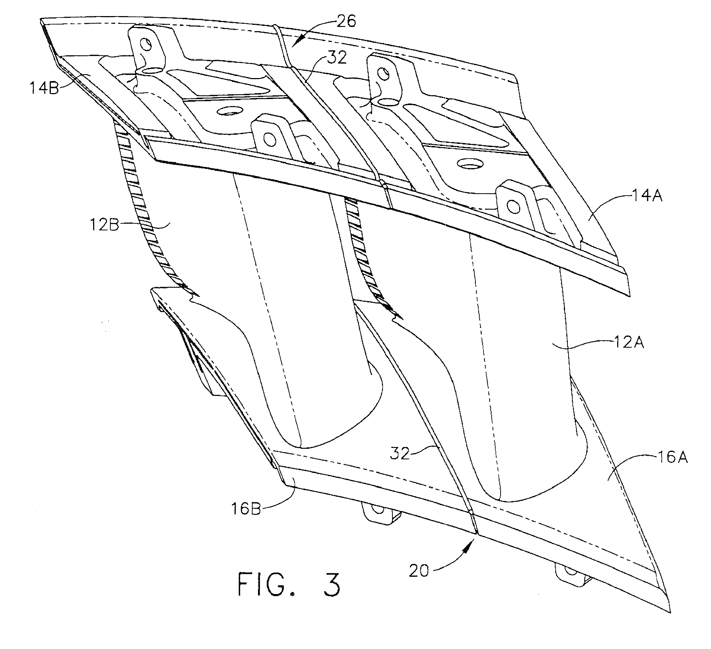

Initially, the singlets 18A and 18B are placed in a side-by-side relationship as depicted in Figure 3, such that the above-mentioned inner and outer joints 20 and 26 are formed. Appropriate fixturing devices may be used to hold the singlets 18A and 18B in this relationship, and if necessary the joints 20 and 26 may be temporarily secured by one or more tack welds.

A braze preform 32 which is made using a metal injection molding (MIM) process is placed adjacent to or inside each of the joints 20 and 26. Figure 4 illustrates a braze preform 32 which is in the form of an elongated circular cross-section wire. The braze preform 32 comprises metallic particles 34 having a size of about 100 micrometers or less, and a binder 36. The shape of the preform 32 is limited only by the shape of the mold used to construct it, as described in detail below.

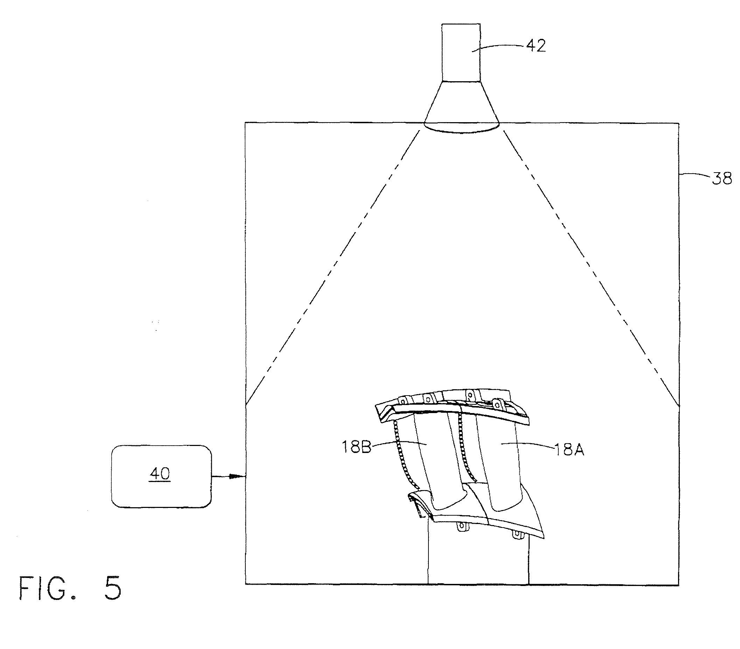

Once fixtured, the preform 32 is microwave brazed. As shown in Figure 5, The singlets 18 are placed in a chamber 38 which includes means for creating a suitable atmosphere to prevent undesired oxidation of the preform 32 or other reactions during the sintering process. In the illustrated example a supply 40 of inert gas such as argon is connected to the interior of the chamber 38. The brazing could also be performed under a vacuum. A microwave source 42 such as a known type of cavity magnetron with an output in the microwave frequency range is mounted in communication with the chamber 38 so that either direct or reflected waves will have a clear "line of sight" to the preform 32. In the illustrated example, only the brazing of the outer joint 26 is shown. The microwave spectrum covers a range of about 1 GHz to 300 GHz. Within this spectrum, an output frequency of about 2.4 GHz is known to couple with and heat metallic particles without passing through solid metals.

The microwave source 42 is activated to irradiate the preform 32. Because of the small metallic particle size in the preform 32, the microwaves couple with the particles 34 and heat them, and will be reflected by the singlets I without heating them. The preform 32 is heated to a temperature above the liquidus temperature of the metallic particles 34, causing it to melt into liquid braze alloy and flow within the outer joint 26. The braze alloy is then allowed to cool and solidify, forming a metallurgical bond between the singlets 18A and 18B. Using this process, the reduced contact area (compared to a braze slurry) will allow the heating of the braze alloy to temperatures above the recrystallization or grain growth temperature of the singlets 18A or 18B with significant heating of those components. Because the heating is targeted only to the preform 32, this will allow the use of braze alloys with little or no melting point depressants.

The braze preforms 32 are made thorough a MIM process as follows. Initially, a braze alloy in the form of a metallic powder 34 and a suitable binder 36 are provided. Suitable braze alloys are known in the art and typically include an alloy base similar to the component being brazed. For gas turbine engine components, the braze alloy is typically nickel-based or cobalt-based. Optionally, the braze alloy composition may contain one or more components for lowering the melting point of the braze alloy to ensure that the braze alloy melts in a temperature range lower than that of any components being joined. Melting point suppressants for nickel-base and cobalt-base braze alloys include silicon, boron, phosphorous, or combinations thereof. The specific braze alloy used is not of particular importance so long as it is capable of being processed into a powder for the MIM process.

For optimum performance in the injection molding process and also for compatibility with microwave heating, the particle size of the metallic powder should be about 100 micrometers or less.

The binder 36 may be any material which is chemically compatible with the metallic powder and which allows the required processing (e.g. mixing, injection, solidification, and leaching). Examples of known suitable binders 36 include waxes and polymer resins. The binder 36 may be provided in a powder form.

The binder 36 and the metallic powder 34 are thoroughly mixed together. The mixture is then heated to melt the binder and create a fluid with the metallic powder 34 coated by the binder 36. Next, the mixture is formed into a predetermined shape. One way of forming the mixture is to use a known injection-molding apparatus. The mixture is extruded into the cavity of a mold. The mold may optionally be heated to avoid excessively rapid solidification of the binder which would result in a brittle preform.

Instead of melting the binder in a discrete batch, the mixture could be molded in a continuous manner using known injection molding equipment capable of melting the binder as it passes through the screw. Once the mixture has solidified, the mold is opened and the resulting uncompacted or "green" preform is removed.

The preform comprises metal particles 34 suspended in the solidified binder 36. The preform has sufficient mechanical strength to undergo further processing, but it somewhat fragile. The preform 32 may be leached to remove the majority of the binder 36, resulting in a "brown" preform. This may be done by submerging or washing the preform 32 with a suitable solvent which dissolves the binder 36 but does not attack the metallic powder 34.

The preform 32 may be used for the above-described microwave brazing process in the "green" or "brown" state. Optionally, the preform 32 may be sintered to increase its density and strength. The preform 32 is placed in a chamber similar to the chamber 38 described above which includes means for creating a vacuum or other suitable atmosphere to prevent undesired oxidation of the preform 32 or other reactions during the sintering process. A microwave source as described above may be used, or conventional heating could be employed.

If sintered, the preform 32 is heated to a temperature below the liquidus temperature of the metallic powder 34 and high enough to melt and drive out remaining binder 36. For the purposes of microwave brazing as described above, the preform 32 must contain braze alloy in a powder or particulate state, such that it will absorb microwave energy. The temperature and time of any sintering step are therefore limited so that the preform 32 is substantially less than 100% dense. When the sintering cycle is complete, the preform 32 is removed from the chamber and allowed to cool.

The foregoing has described a process for microwave brazing of components. While specific embodiments of the present invention have been described, it will be apparent to those skilled in the art that various modifications thereto can be made without departing from the spirit and scope of the invention. Accordingly, the foregoing description of the preferred embodiment of the invention and the best mode for practicing the invention are provided for the purpose of illustration only and not for the purpose of limitation, the invention being defined by the claims.

## Claims

1. A method of producing a braze preform (32) for microwave brazing, comprising:
providing a mixture of a brazing alloy in metallic powder (34) form and a binder (36); and
melting the binder (36) and forming the mixture into a preform (32) having a preselected shape.

2. The method of claim 1 wherein a majority of the binder (36) is removed by washing the preform (32) with a solvent selected to dissolve the binder (36) but not the metallic powder (34).

3. The method of claim 2 further comprising heating the preform (32) to remove the remainder of the binder (36).

4. The method of claim 1 wherein the step of forming the mixture into a preform (32) comprises injecting the mixture into a mold having a preselected shape.

5. The method of claim 1 wherein the preselected shape is an wire of circular cross-section.

6. A method of bonding together two metallic components, comprising:
providing a braze preform (32) comprising brazing alloy in metallic powder (34) form contained in a solidified binder (36);
placing the preform (32) adjacent to or within a joint defined between the metallic components;
heating the perform (32) using microwave energy to a brazing temperature above the melting point of the perform (32), to cause the brazing alloy to melt and flow into the joint; and
allowing the brazing alloy to cool to form a bond between the metallic components.

7. The method of claim 6 wherein the brazing temperature is below the melting point of either of the metallic components.

8. The method of claim 6 further comprising, before the step of heating, leaching substantially all of the binder (36) from the preform (32) by washing the preform (32) with a solvent selected to dissolve the binder (36) but not the metallic powder (34).

9. The method of claim 6 wherein the metallic powder (34) is selected from the group comprising nickel, cobalt, and alloys thereof.

10. The method of claim 6 in which the metallic powder (34) has a particle size of about 100 micrometers or less.
